# EUROPÄISCHE PATENTANMELDUNG

(11) **EP 4 563 502 A1**
(43) Veröffentlichungstag der Anmeldung: **04.06.2025**
(21) Anmeldenummer: 24215654.5
(22) Anmeldetag: 27.11.2024
(51) Int. Cl.: B65G 21/20, B65G 43/08, B65G 47/71, B65G 47/76, B65G 47/82, B65G 47/68

(54) **VORRICHTUNG UND VERFAHREN ZUM AUFTEILEN EINES BEHÄLTERMASSENSTROMS**

(30) Priorität: 01.12.2023 DE 102023133635
(71) Anmelder: KRONES AG, 93073 Neutraubling (DE)
(72) Erfinder: KINSKY, Rico, 93073 Neutraubling (DE); RICHTER, Christian, 93073 Neutraubling (DE); HEIGL, Stefan, 93073 Neutraubling (DE)
(74) Vertreter: v. Bezold & Partner Patentanwälte - PartG mbB

(57) **Zusammenfassung**

Die Erfindung betrifft u.a. eine Vorrichtung (10) zum Aufteilen eines Behältermassenstroms (B). Die Vorrichtung (10) weist einen Behältermassenstromförderer (12) mit einem ersten Behältermassenstromauslass (14) und einem zweiten Behältermassenstromauslass (16) auf. Die Vorrichtung (10) weist eine Verteileinrichtung (22) mit einem bewegbaren Führungselement (24) zum Aufteilen des Behältermassenstroms (B) zu dem ersten Behältermassenstromauslass (14) und dem zweiten Behältermassenstromauslass (16) und einem Antrieb (28), der zum Bewegen des bewegbaren Führungselements (24) antreibend mit dem bewegbaren Führungselement (24) verbunden ist, auf. Eine Erfassungseinrichtung (20, 21) ist dazu ausgebildet, einen Belegungsgrad des Behältermassenstromförderers (12) stromaufwärts von der Verteileinrichtung (22) zu erfassen. Eine Steuereinrichtung (46) ist dazu konfiguriert, den Antrieb (28) zum Bewegen des bewegbaren Führungselements (24) zu einer gewünschten Position in Abhängigkeit von dem erfassten Belegungsgrad zu betreiben.

## Beschreibung

### Technisches Gebiet

Die Erfindung betrifft eine Vorrichtung zum Aufteilen eines Behältermassenstroms für eine Behälterbehandlungsanlage. Die Erfindung betrifft ferner ein Verfahren zum Aufteilen eines Behältermassenstroms.

### Technischer Hintergrund

Die Verteilung eines Behältermassenstroms auf zwei Maschinen oder zwei Einlässe einer Maschine kann beispielsweise dadurch erfolgen, dass die Behälterförderer vor einer Verteilbaugruppe relativ voll gehalten werden. Der Behältermassenstrom kann dann mittels eines zentrisch angeordneten Keils der Verteilbaugruppe auf zwei Auslässe (bzw. Zuläufe zu den zwei Maschinen / zwei Einlässen) aufgeteilt werden.

Aus regelungstechnischer Sicht kann es kaum oder gar nicht möglich sein, diese Behälterförderer so voll zu halten, dass eine gleichmäßige Verteilung auf die zwei Auslässe gewährleistet werden kann. In diesen Fällen kann zuerst der eine Auslass vollgestaut werden und, wenn dieser komplett gefüllt ist, kann der zweite Auslass mit Behälter gefüllt werden.

Eine weitere Möglichkeit sind mittels Federkraft auf den Behältermassenstrom drückende sogenannte Eindrückgeländer. Diese sollen den ankommenden Behältermassenstrom mittig zum Aufteilkeil führen und damit eine einigermaßen gleichmäßige Verteilung gewährleisten. Die dabei vielschichtigen Einflussfaktoren, wie Behältergewicht, Förderkettenauswahl, Reibungskoeffizient usw. können durch die Federkraft jedoch nicht annähernd berücksichtigt werden.

Nachteilig an den beschriebenen Techniken können bspw. die hohen Staudrücke in den ungleichmäßig befüllten Auslässen sein. Dadurch können bspw. Glasbehälter beschädigt werden und Scherben entstehen, die den Behälterförderer usw. beschädigen können. Ebenso können bspw. Kunststoffbehälter und Dosen deformiert werden. Die Behälter können auch verkratzen. Ein weiterer Nachteil kann in einer verringerten Linieneffizienz bestehen, die durch ein langwieriges Wiederbefüllen mit Behältern nach einem Stillstand bedingt ist.

Die DE 92 04 040 U1 offenbart eine Transportvorrichtung für aufrechtstehende Gefäße mit einem mehrbahnigen Zuförderer, einem sich in Förderrichtung anschließenden, ebenfalls mehrbahnigen Abförderer und einer den Zuförderer mit dem Abförderer verbindenden Überschubeinrichtung. Die Überschubeinrichtung weiset mehrere, sich jeweils nur über einen Teil der Breite des Zu- und Abförderers erstreckende und in Förderrichtung versetzt angeordnete Überschubabschnitte auf. Diesen Überschubabschnitten sind Führungsmittel vorgeordnet.

Der Erfindung liegt die Aufgabe zu Grunde, eine verbesserte Technik zum Aufteilen eines Behältermassenstroms zu schaffen. Vorzugsweise soll die Technik eine Aufteilung mit wesentlich verringerten Staudrücken ermöglichen, wodurch die Behälter und die Anlage geschont werden kann. Bevorzugt soll die Technik eine verbesserte Linieneffizienz ermöglichen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft eine Vorrichtung zum Aufteilen eines (z. B. geordneten oder ungeordneten) Behältermassenstroms für eine Behälterbehandlungsanlage. Die Vorrichtung weist einen (z. B. mehrbahnigen) Behältermassenstromförderer mit einem ersten Behältermassenstromauslass und einem zweiten Behältermassenstromauslass, der (z. B. parallel) neben dem ersten Behältermassenstromauslass angeordnet ist, auf. Die Vorrichtung weist eine Verteileinrichtung mit einem bewegbaren, vorzugsweise schwenkbaren, Führungselement zum Aufteilen des Behältermassenstroms zu dem ersten Behältermassenstromauslass und dem zweiten Behältermassenstromauslass (z. B. in einem gewünschten Verhältnis) und einem Antrieb, der zum Bewegen, vorzugsweise Schwenken, des bewegbaren Führungselements antreibend mit dem bewegbaren Führungselement verbunden ist, auf. Die Vorrichtung weist eine, vorzugsweise berührungslose (z. B. optische) oder taktile, Erfassungseinrichtung, die dazu ausgebildet ist, einen (aktuellen) Belegungsgrad des Behältermassenstromförderers stromaufwärts von der Verteileinrichtung (z. B. direkt oder indirekt) zu erfassen, auf. Die Vorrichtung weist eine Steuereinrichtung auf, die dazu konfiguriert ist, den Antrieb zum Bewegen des bewegbaren Führungselements zu einer (jeweils) gewünschten (z. B. Schwenk- und/oder Verschiebe-) Position in Abhängigkeit von dem erfassten Belegungsgrad zu betreiben, vorzugsweise wahlweise zum gleichmäßigen oder ungleichmäßigen Aufteilen des Behältermassenstroms zu dem ersten Behältermassenstromauslass und dem zweiten Behältermassenstromauslass.

Vorteilhaft kann die Vorrichtung durch eine (intelligente) Steuerung der Verteilung abhängig von dem erfassten Belegungsgrad eine Befüllung zweier Auslässe (Zuläufe) in einem gewünschten Verhältnis, z. B. gleichmäßige Befüllung, ermöglichen. Vorteilhaft kann bereits vor der Verteilung der Belegungsgrad mittels der Erfassungseinrichtung erfasst/abgefragt und die nachfolgende Verteilung auf eine gewünschte Position gestellt werden, die den ankommenden Behältermassenstrom im gewünschten Verhältnis, z. B. gleichmäßig, verteilt. Besonders vorteilhaft kann die Vorrichtung damit ein gleichmäßiges, gleichzeitiges Befüllen der zwei Behältermassenstromauslässe (Zuläufe) und geringe Staudrücke ermöglichen. Deformationen und Beschädigungen an den Behältern können vorteilhaft verringert werden. Zudem kann eine höhere Linieneffizienz durch sofortiges Wiederanlaufen nach einem längeren Stillstand ermöglicht werden. Ebenso ist es möglich, einen ankommenden Behältermassenstrom automatisiert von einem Maschinenzulauf auf eine andere Maschine umzuverteilen. Dies kann im laufenden Betrieb erfolgen. Somit ist es möglich, beim Ausfall einer Maschine den gesamten Behälterstrom nur noch auf eine zweite Maschine umzuleiten. Weitere denkbare Einsatzmöglichkeiten können die Verteilung als automatisches Steckgeländer beinhalten. Dies kann als Kundensonderwunsch, als Kreislaufbetrieb bei Reinigungsmaschinen (längerer Anlagenstillstand bei Glasflaschen) oder zum Beispiel bei unzugänglichen Höhen nützlich und sinnvoll sein.

In einem Ausführungsbeispiel weist der Antrieb ein selbsthemmendes Getriebe, vorzugsweise Schneckengetriebe, auf. Vorteilhaft kann die Selbsthemmung ein Wegdrücken des bewegbaren Führungselements durch einen großen Behältermassenstrom verhindern und damit eine vergleichsweise genaue Verteilung des Behältermassenstroms im gewünschten Verhältnis ermöglichen. Ferner kann es durch die Verwendung großer Untersetzungen möglich sein, die Verstellung mit einem relativ geringen Kraftaufwand zu schalten und auch einen Schaltvorgang während der Produktion durchzuführen. D.h., selbst wenn der Belegungsgrad aktuell sehr hoch ist und "in den Behältermassenstrom" geschaltet werden muss, ist dies möglich.

In einem weiteren Ausführungsbeispiel ist das bewegbare Führungselement an einer Längsaußenseite des Behältermassenstromförderers um eine Hochachse zum Schwenken über eine (z. B. horizontale) Förderfläche des Behältermassenstromförderers schwenkbar gelagert. Vorteilhaft kann das bewegbare Führungselement somit in die jeweils gewünschte Position ein- und ausgeschwenkt werden.

In einem weiteren Ausführungsbeispiel ist das bewegbare Führungselement an einer Längsaußenseite des Behältermassenstromförderers angewinkelt, vorzugsweise quer, zu einer Förderrichtung bzw. Längsachse des Behältermassenstromförderers zum Bewegen über eine (z. B. horizontale) Förderfläche des Behältermassenstromförderers verschiebbar (z. B. ein- und ausfahrbar) gelagert. Vorteilhaft kann das bewegbare Führungselement somit in die jeweils gewünschte Position ein- und ausgefahren werden.

In einer Ausführungsform ist das bewegbare Führungselement als ein Schwenkarm ausgeführt. Alternativ oder zusätzlich kann das bewegbare Führungselement mit einer wandförmigen Verkleidung zum Führen von Behältern verkleidet sein.

In einer weiteren Ausführungsform kann die Erfassungseinrichtung dazu ausgebildet sein, den Belegungsgrad als Grad, zu dem der Behältermassenstromförderer quer zu seiner Förderrichtung bzw. Längsachse mit Behältern belegt ist, (z. B. direkt oder indirekt) zu erfassen, vorzugsweise:
- (z. B. direkt) als eine Anzahl von mit Behältern des Behältermassenstroms belegten Transportbahnen oder Transportelementen des Behältermassenstromförderers oder einer davon abgeleiteten Größe; und/oder
- (z. B. indirekt) über ein Erfassen einer von Behältern freien Transportbreite des Behältermassenstromförderers oder einer davon abgeleiteten Größe; und/oder
- ausgehend von einer Längsseite des Behältermassenstromförderers, bevorzugt derjenigen Längsseite, an der das bewegbare Führungselement angeordnet ist, oder derjenigen Längsseite, die gegenüberliegend zu dem bewegbaren Führungselement angeordnet ist.

In einer weiteren Ausführungsform ist die Erfassungseinrichtung dazu ausgebildet, den Belegungsgrad in einem Kurvenabschnitt des Behältermassenstromförderers, direkt stromabwärts von einem Kurvenabschnitt des Behältermassenstromförderers, bei einem seitlichen Überschub des Behältermassenstromförderers oder direkt stromabwärts von einem seitlichen Überschub des Behältermassenstromförderers zu erfassen. Optional kann der Kurvenabschnitt oder der seitliche Überschub dazu ausgebildet und/oder betreibbar sein, dass die Behälter des Behältermassenstroms zum Anlegen an eine Längsseite des Behältermassenstromförderers angeregt werden, bevorzugt derjenigen Längsseite, an der das bewegbare Führungselement angeordnet ist. Vorteilhaft kann damit auf einfache und zuverlässige Weise sichergestellt werden, dass der die Verteileinrichtung erreichende Behältermassenstrom hin zu einer Längsaußenseite des Behältermassenstromförderers ausgerichtet bzw. positioniert ist.

In einer Ausführungsvariante weist die Erfassungseinrichtung eine Sensorbrücke oder eine Sensorleiste, vorzugsweise mit mehreren voneinander beabstandeten Sensoren, auf, die stromaufwärts von der Verteileinrichtung und oberhalb von dem Behältermassenstromförderer, vorzugsweise oberhalb von einem Kurvenabschnitt des Behältermassenstromförderers, oberhalb von einem seitlichen Überschub des Behältermassenstromförderers, oberhalb von dem Behältermassenstromförderer direkt stromabwärts von einem Kurvenabschnitt oder einem seitlichen Überschub des Behältermassenstromförderers, angeordnet ist. Vorteilhaft kann damit auf einfache und zuverlässige Weise der Belegungsgrad erfasst werden.

Alternativ oder zusätzlich weist die Erfassungseinrichtung bspw. einen (z. B. berührungslos arbeitenden) Abstandssensor (z. B. Licht-Abstandssensor, Laser-Abstandssensor oder Ultraschall-Abstandssensor) auf, der vorzugsweise stromaufwärts von der Verteileinrichtung und/oder seitlich neben dem Behältermassenstromförderer angeordnet ist, bevorzugt auf einer Behälterförderhöhe des Behältermassenstromförderers und/oder quer zu einer Förderrichtung des Behältermassenstromförderers ausgerichtet.

Alternativ oder zusätzlich weist die Erfassungseinrichtung bspw. eine Kamera zum Erfassen des Belegungsgrads auf.

In einer Ausführungsvariante weist die Verteileinrichtung ferner ein keilförmiges Führungselement auf, das an einem gemeinsamen stromaufwärtsseitigen Ende des ersten Behältermassenstromauslasses und des zweiten Behältermassenstromauslasses zwischen dem ersten Behältermassenstromauslass und dem zweiten Behältermassenstromauslass angeordnet ist. Vorteilhaft kann damit die Aufteilung des Behältermassenstroms auf die beiden Behältermassenstromauslässe weiter verbessert werden.

In einem Ausführungsbeispiel weist die Vorrichtung ferner mindestens eine weitere Erfassungseinrichtung auf, die dazu ausgebildet ist, einen Behälterstau im oder stromabwärts von dem ersten Behältermassenstromauslass und/oder im oder stromabwärts von dem zweiten Behältermassenstromauslass zu erfassen. Vorzugweise kann die Steuereinrichtung ferner dazu konfiguriert sein, den Antrieb zum Bewegen des bewegbaren Führungselements zu einer gewünschten Position in Abhängigkeit von dem erfassten Behälterstau zu betreiben. Vorteilhaft kann die Vorrichtung somit eine Verteilung an eine stromabwärtsseitig auftretende Stausituation anpassen.

In einem weiteren Ausführungsbeispiel weist die Vorrichtung ferner eine erste Behälterbehandlungseinrichtung, die stromabwärts nur vom dem ersten Behältermassenstromauslass angeordnet ist, und eine zweite Behälterbehandlungseinrichtung, die stromabwärts nur vom dem zweiten Behältermassenstromauslass angeordnet ist, auf. Die Steuereinrichtung kann vorzugsweise ferner dazu konfiguriert sein, den Antrieb zum Bewegen des bewegbaren Führungselements zu einer gewünschten Position in Abhängigkeit von einem Betriebszustand der ersten Behälterbehandlungseinrichtung und/oder einem Betriebszustand der zweiten Behälterbehandlungseinrichtung zu betreiben. Vorteilhaft kann die Vorrichtung somit eine Verteilung an einen Betriebszustand, z. B. einen aufgetretenen Funktionsfehler, in einer stromabwärtsseitig angeordneten Behälterbehandlungseinrichtung anpassen.

In einer Ausführungsform weist die Verteileinrichtung ferner ein Behälterrückstauschutzelement auf, das mit dem bewegbaren Führungselement zum Mitbewegen mit dem bewegbaren Führungselement zum Abschirmen eines (Tot-) Raums zwischen einer Längsaußenseite des Behältermassenstromförderers und einer der Längsaußenseite zugewandten Innenseite des bewegbaren Führungselements verbunden ist. Vorteilhaft kann damit verhindert werden, dass eine Bewegbarkeit des bewegbaren Führungselements durch sich rückstauende Behälter beeinträchtigt werden kann.

In einer weiteren Ausführungsform ist das Behälterrückstauschutzelement mit einem vorderen Ende des bewegbaren Führungselements, vorzugsweise gelenkig (z. B. schwenkbar), verbunden. Alternativ oder zusätzlich kann das Behälterrückstauschutzelement an der Längsaußenseite um eine Hochachse verschwenkbar und/oder parallel zu der Längsaußenseite verschiebbar gelagert sein. Alternativ oder zusätzlich kann das Behälterrückstauschutzelement mit einer wandförmigen Verkleidung zum Führen von Behältern verkleidet sein. Alternativ oder zusätzlich kann das Behälterrückstauschutzelement als ein, vorzugsweise verschiebbarer, Schwenkarm ausgeführt sein.

Ein weiterer Aspekt der vorliegenden Offenbarung betrifft ein Verfahren zum Aufteilen eines Behältermassenstroms, vorzugsweise mittels einer Vorrichtung wie hierin offenbart, (z. B. in einer Behälterbehandlungsanlage). Das Verfahren weist auf:
- mittels einer, vorzugsweise berührungslosen (z. B. optischen) oder taktilen, Erfassungseinrichtung, Erfassen eines Belegungsgrads eines einen Behältermassenstrom fördernden (z. B. mehrbahnigen) Behältermassenstromförderers stromaufwärts von einer Verteileinrichtung; und
- mittels einer Steuereinrichtung, Betreiben eines Antriebs zum Bewegen, vorzugsweise Schwenken, eines bewegbaren, vorzugsweise schwenkbaren, Führungselements der Verteileinrichtung zu einer (jeweils) gewünschten (z. B. Verschiebe- und/oder Schwenk-) Position in Abhängigkeit von dem erfassten Belegungsgrad zum Aufteilen des Behältermassenstroms zu einem ersten Behältermassenstromauslass und einem zweiten Behältermassenstromauslass des Behältermassenstromförderers (z. B. in einem gewünschten Verhältnis), wahlweise zum gleichmäßigen oder ungleichmäßigen Aufteilen des Behältermassenstroms zu dem ersten Behältermassenstromauslass und dem zweiten Behältermassenstromauslass.

Vorteilhaft können mit dem Verfahren die gleichen Vorteile erzielt werden, die bereits unter Bezugnahme auf die Vorrichtung erläutert wurden.

In einem weiteren Ausführungsbeispiel weist das Verfahren ferner auf:
- mittels mindestens einer weiteren Erfassungseinrichtung, Erfassen eines Behälterstaus im oder stromabwärts von dem ersten Behältermassenstromauslass und/oder im oder stromabwärts von dem zweiten Behältermassenstromauslass, wobei das Betreiben des Antriebs mittels der Steuereinrichtung zum Bewegen des bewegbaren Führungselements zu einer gewünschten Position ferner in Abhängigkeit von dem erfassten Behälterstau erfolgt.

Alternativ oder zusätzlich kann das Betreiben des Antrieb mittels der Steuereinrichtung zum Bewegen des bewegbaren Führungselements zu einer gewünschten Position ferner in Abhängigkeit von einem (z. B. erfassten oder empfangenen) Betriebszustand einer ersten Behälterbehandlungseinrichtung, die stromabwärts nur vom dem ersten Behältermassenstromauslass angeordnet ist, und von einem (z. B. erfassten oder empfangenen) Betriebszustand einer zweiten Behälterbehandlungseinrichtung, die stromabwärts nur vom dem zweiten Behältermassenstromauslass angeordnet ist, erfolgen.

In einem weiteren Ausführungsbeispiel weist das Verfahren ferner auf:
- mittels eines Behälterrückstauschutzelements der Verteileinrichtung, Verhindern eines Rückstauens von Behältern in einen durch das Behälterrückstauschutzelement abgeschirmten (Tot-) Raum zwischen einer Längsaußenseite des Behältermassenstromförderers und einer der Längsaußenseite zugewandten Innenseite des bewegbaren Führungselements, wobei sich das Behälterrückstauschutzelement mit dem bewegbaren Führungselement mitbewegt.

Ein weiterer Aspekt der vorliegenden Offenbarung betrifft eine Behälterbehandlungsanlage (z. B. zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel). Die Behälterbehandlungsanlage kann die Vorrichtung wie hierin offenbart aufweisen.

Beispielsweise können die Behälter des Behältermassenstroms als Flaschen, Dosen, Kanister, Kartons, Flakons, Tuben usw. ausgeführt sein.

Vorzugsweise kann sich der Begriff "Steuereinrichtung" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Draufsicht auf eine Vorrichtung zum Aufteilen eines Behältermassenstroms gemäß einem Ausführungsbeispiel der vorliegenden Offenbarung;
- Figur 2: eine perspektivische Ansicht einer Verteileinrichtung der beispielhaften Vorrichtung; und
- Figur 3: eine schematische Draufsicht auf eine modifizierte Vorrichtung zum Aufteilen eines Behältermassenstroms gemäß einem Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

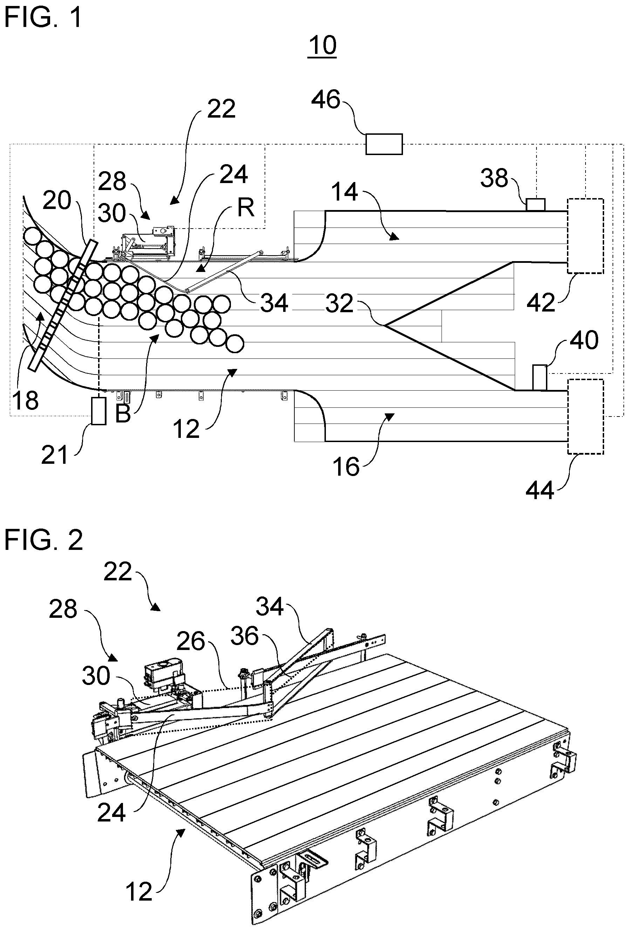

Die Figur 1 zeigt eine Vorrichtung 10 zum Aufteilen eines Behältermassenstroms B, und die Figur 2 zeigt einen Ausschnitt davon. Der aufzuteilende Behältermassenstrom B kann bspw. geordnet oder ungeordnet sein.

Die Vorrichtung 10 kann in einer Behälterbehandlungsanlage angeordnet bzw. umfasst sein. Die Vorrichtung 10 kann überall dort in einer Behälterbehandlungsanlage angeordnet sein, wo ein Behältermassenstrom auf zwei Behältermassenströme aufzuteilen ist.

Die Vorrichtung 10 weist einen Behältermassenstromförderer 12, eine Erfassungseinrichtung 20 und/oder 21, eine Verteileinrichtung 22 und eine Steuereinrichtung 46 auf. Optional kann die Vorrichtung 10 ferner bspw. mindestens eine weitere Erfassungseinrichtung 38, 40, eine erste Behälterbehandlungseinrichtung 42 und/oder eine zweite Behälterbehandlungseinrichtung 44 aufweisen.

Der Behältermassenstromförderer 12 kann die Behälter des Behältermassenstroms B durch einen Abschnitt der Behälterbehandlungsanlage transportieren. Der Behältermassenstromförderer 12 kann die Behälter des Behältermassenstroms B aufrechtstehend transportieren. Der Behältermassenstromförderer 12 kann bspw. als Mattenkettenförderer, Bandförderer oder Plattenförderer o.Ä. ausgeführt sein.

Der Behältermassenstromförderer 12 kann die Behälter des Behältermassenstroms B bodenseitig mittels einer Förderfläche abstützen.

Bevorzugt ist der Behältermassenstromförderer 12 mehrbahnig. Der Behältermassenstromförderer 12 kann mehrere Förderbahnen aufweisen. Die Förderbahnen können nebeneinander verlaufen und zusammen die Förderfläche des Behältermassenstromförderers 12 bilden. Die Bahnen können bspw. jeweils durch ein umlaufendes Transportelement, wie ein Band oder eine Mattenkette, gebildet sein. Die Förderfläche kann bspw. durch mehrere nebeneinander angeordnete Transportelemente, wie bspw. Bänder oder Mattenketten, gebildet sein.

Der Behältermassenstromförderer 12 weist einen ersten Behältermassenstromauslass 14 und einem zweiten Behältermassenstromauslass 16 auf.

Die erste Behältermassenstromauslass 14 ist neben dem zweiten Behältermassenstromauslass 16 angeordnet. Der erste Behältermassenstromauslass 14 und der zweite Behältermassenstromauslass 16 können sich bspw. parallel erstrecken. Der erste Behältermassenstromauslass 14 und der zweite Behältermassenstromauslass 16 können von einem gemeinsamen Behältermassenstromeinlass des Behältermassenstromförderers 12 den Behältermassenstrom B empfangen, aufgeteilt von der Verteileinrichtung 22.

Der Behältermassenstromförderer 12 kann einen Kurvenabschnitt 18 aufweisen. Ansonsten kann sich der Behältermassenstromförderer 12 im Wesentlichen geradlinig erstrecken, z. B. im Bereich der Verteileinrichtung 22.

Der Kurvenabschnitt 18 kann eingangsseitig bezüglich der Vorrichtung 10 angeordnet sein. Der Kurvenabschnitt 18 kann bspw. den (gemeinsamen) Behältermassenstromeinlass aufweisen. Der Kurvenabschnitt 18 kann stromaufwärts von der Verteileinrichtung 22 angeordnet sein.

Wie in Figur 1 dargestellt, kann der Kurvenabschnitt 18 so ausgebildet und/oder betreibbar sein, dass die Behälter des Behältermassenstroms B zum Anlegen an eine Kurveninnenseite des Kurvenabschnitts 18 angeregt bzw. beaufschlagt werden. Beispielsweise können die Behälter des Behältermassenstroms B in dem Kurvenabschnitt 18 so angeregt bzw. beaufschlagt werden, dass sie sich neben der Bewegung in der Förderrichtung des Behältermassenstromförderers 12 auch in einer Richtung quer zu der Förderrichtung bzw. Längsachse hin zu der Kurveninnenseite bewegen, zum Beispiel bis sie jeweils an eine Kurveninnenseite oder einen anderen, kurveninnenseitigeren Behälter anstoßen. Alternativ kann der Kurvenabschnitt 18 bspw. so ausgebildet und/oder betreibbar sein, dass die Behälter des Behältermassenstroms B zum Anlegen an eine Kurvenaußenseite des Kurvenabschnitts 18 angeregt bzw. beaufschlagt werden (nicht in Figur 1 dargestellt).

Die Erfassungseinrichtung 20, 21 ist dazu ausgebildet, einen (aktuellen) Belegungsgrad des Behältermassenstromförderers 12 stromaufwärts von der Verteileinrichtung 22 zu erfassen. Die Erfassungseinrichtung 20, 21 kann zum Erfassen des Belegungsgrads jegliches denkbare Messprinzip nutzen und jegliche denkbare Konfiguration und jegliche denkbare Anordnung aufweisen.

Vorzugsweise kann die Erfassungseinrichtung 20, 21 den Belegungsgrad als Grad, zu dem der Behältermassenstromförderer 12 quer zu einer Förderrichtung bzw. Längsachse des Behältermassenstromförderers 12 mit Behältern des Behältermassenstroms B belegt ist, erfassen. Bevorzugt kann der Belegungsgrad als eine Anzahl von mit Behältern des Behältermassenstroms B belegten Transportbahnen oder Transportelementen des Behältermassenstromförderers 12 oder einer davon abgeleiteten Größe (z. B. ein Längenmaß o.Ä.) erfasst werden. Vorzugsweise kann der Belegungsgrad ausgehend von einer Längsseite des Behältermassenstromförderers 12, besonders bevorzugt derjenigen Längsseite, an der ein bewegbares Führungselement 24 der Verteileinrichtung 22 angeordnet ist, erfasst werden.

Im dargestellten Ausführungsbeispiel von Figur 1 kann der Belegungsgrad von der Erfassungseinrichtung 20, 21 beispielhaft als vier (von acht) belegte Transportbahnen des Behältermassenstromförderers 12 erfasst werden.

Bevorzugt kann die Erfassungseinrichtung 20, 21 den Belegungsgrad in dem Kurvenabschnitt 18 des Behältermassenstromförderers 12, wie in Figur 1 beispielhaft dargestellt, oder direkt stromabwärts von dem Kurvenabschnitt 18 erfassen.

Bevorzugt kann die Erfassungseinrichtung 20, 21 stromaufwärts von der Verteileinrichtung 22 angeordnet sein. Vorzugsweise kann die Erfassungseinrichtung 20 oberhalb von einer Förderfläche des Behältermassenstromförderers 12 angeordnet sein. Vorzugsweise kann die Erfassungseinrichtung 21 neben einer Förderfläche des Behältermassenstromförderers 12 angeordnet sein.

Wie in Figur 1 beispielhaft dargestellt ist, kann die Erfassungseinrichtung 20 beispielsweise als eine Sensorbrücke oder eine Sensorleiste ausgeführt sein. Die Sensorbrücke oder Sensorleiste kann mehrere voneinander beabstandete Sensoren aufweisen. Eine Anzahl der Sensoren kann abhängig von einer Breite der Transportfläche des Behältermassenstromförderers 12 sein.

Beispielsweise kann die Erfassungseinrichtung 20 zwischen vier und zwanzig Sensoren aufweisen. Jeder Sensor kann bspw. einer oder mehrerer der Transportbahnen des Behältermassenstromförderers 12 zugeordnet sein und dessen/deren Belegungszustand erfassen. Beispielsweise kann über jeder Transportbahn je mindestens ein Sensor der mehreren Sensoren angeordnet sein.

Die Sensorbrücke oder Sensorleiste kann sich quer zur Förderrichtung bzw. Längsachse des Behältermassenstromförderers 12 über die Förderfläche des Behältermassenstromförderers 12 erstrecken, vorzugsweise über den Kurvenabschnitt 18.

Bevorzugt kann die Erfassungseinrichtung 20 eine berührungslose Erfassungseinrichtung sein. Die Erfassungseinrichtung 20 kann bspw. mehrere optische, kapazitive oder auf einem anderen Messprinzip beruhende, berührungslose Abstandssensoren aufweisen. Beispielsweise kann über jeder Transportbahn des Behältermassenstromförderers 12 je mindestens ein Abstandssensor angeordnet sein.

Alternativ oder zusätzlich zu der Erfassungseinrichtung 20 kann beispielsweise die Erfassungseinrichtung 21 seitlich am Behältermassenstromförderer 12 angeordnet sein, z. B. auf Transporthöhe des Behältermassenstroms B. Die Erfassungseinrichtung 21 kann bspw. als Abstandsensor den Abstand zu den Behältern des Behältermassenstroms B im oder nach Verlassen des Kurvenabschnitts 18 detektieren und somit den Belegungsgrad in Form einer Abstandmessung (indirekt) erfassen. Der Abstandssensor kann bspw. ein Lichttaster, ein Ultraschallsensor oder ein Lasersensor oder ein anderer berührungslos messender Abstandssensor sein. Auch könnte eine Kamera als die Erfassungseinrichtung 21 genutzt werden. In einer Aufnahme der Kamera kann dann mittels Bildauswertung der Belegungsgrad ermittelt und daraufhin bspw. zu der Steuereinrichtung 46 gesendet werden.

Alternativ oder zusätzlich kann die Erfassungseinrichtung 20, 21 beispielsweise eine taktile Erfassungseinrichtung sein oder aufweisen. Sich unter der Erfassungseinrichtung 20 hindurchbewegende Behälter und/oder sich neben der Erfassungseinrichtung 21 vorbeibewegende Behälter des Behältermassenstroms B können beispielsweise mindestens einen Sensorarm (z. B. von mehreren bewegbaren, zum Beispiel schwenkbaren, Sensorarmen) berühren und nach oben oder zur Seite auslenken, vorzugsweise verschwenken. Beispielsweise kann über jeder Transportbahn des Behältermassenstromförderers 12 je mindestens ein Sensorarm angeordnet sein.

Die Verteileinrichtung 22 teilt den Behältermassenstrom B auf den ersten Behältermassenstromauslass 14 und den zweiten Behältermassenstromauslass 16 auf.

Die Verteileinrichtung 22 weist ein Führungselement 24 und einen Antrieb 28 auf. Optional kann die Verteileinrichtung 22 bspw. noch ein Führungselement 32 und/oder ein Behälterrückstauschutzelement 34 aufweisen.

Das Führungselement 24 ist bewegbar. Bevorzugt ist das Führungselement 24 schwenkbar. Das Führungselement 24 kann über eine Förderfläche des Behältermassenstromförderers 12 bewegt, vorzugsweise verschwenkt, werden. Abhängig von einer Position des Führungselements 24 wird der Behältermassenstrom B zu dem ersten Behältermassenstromauslass 14 und dem zweiten Behältermassenstromauslass 16 aufgeteilt.

Wie in den Figuren 1 und 2 beispielhaft dargestellt ist, kann vorzugsweise das Führungselement 24 an einer Längsaußenseite des Behältermassenstromförderers 12 um eine Hochachse zum Schwenken über die Förderfläche des Behältermassenstromförderers 12 schwenkbar gelagert sein. Bevorzugt kann das Führungselement 24 als ein Schwenkarm ausgeführt sein.

Alternativ oder zusätzlich ist es bspw. auch möglich, dass das bewegbare Führungselement 24 an einer Längsaußenseite des Behältermassenstromförderers 12 angewinkelt, vorzugsweise quer, zu einer Förderrichtung bzw. Längsachse des Behältermassenstromförderers 12 zum Bewegen (Verschieben) über die Förderfläche des Behältermassenstromförderers 12 verschiebbar gelagert ist.

Das Führungselement 24 kann mit einer wandförmigen Verkleidung 26 zum Führen von Behältern des Behältermassenstroms B verkleidet sein. Die Figur 2 zeigt in diesem Zusammenhang rein schematisch die Verkleidung 26, die durchsichtig dargestellt ist. Die Verkleidung 26 kann bspw. kraft- und/oder formschlüssig mit dem Führungselement 24 verbunden sein.

Der Antrieb 28 ist zum Bewegen des Führungselements 24 antreibend mit dem Führungselement 24 verbunden. Der Antrieb 28 kann bspw. einen Elektromotor, einen Pneumatikmotor oder einen Hydraulikmotor usw. zum Antreiben des Führungselements 24 aufweisen.

Bevorzugt weist der Antrieb 28 ein selbsthemmendes Getriebe 30 auf. Das selbsthemmende Getriebe 30 kann den Motor antreibend mit dem Führungselement 24 verbinden. Das Getriebe 30 kann bspw. ein Schneckengetriebe sein.

Das Führungselement 32 kann keilförmig bzw. spitz zulaufend sein. Das Führungselement 32 kann an einem gemeinsamen stromaufwärtsseitigen Ende des ersten Behältermassenstromauslasses 14 und des zweiten Behältermassenstromauslasses 16 angeordnet ist. Das Führungselement 32 kann stationär angeordnet bzw. unbewegbar sein. Auf das Führungselement 32 auftreffende Behälter des Behältermassenstroms B können von dem Führungselement 32 je nach Auftreffposition zu dem ersten Behältermassenstromauslass 14 oder dem zweiten Behältermassenstromauslasses 16 geleitet werden.

Das Behälterrückstauschutzelement 34 kann einen (Tot-) Raum R (siehe Figur 1) zwischen einer Längsaußenseite des Behältermassenstromförderers 12 und einer der Längsaußenseite zugewandten Innenseite des Führungselements 24 abschirmen bzw. schließen. Mittels des Behälterrückstauschutzelements 34 der Verteileinrichtung 22 kann ein Rückstauen von Behältern in den Raum R, wodurch das Führungselement 24 blockiert werden könnte, verhindert werden.

Das Behälterrückstauschutzelement 34 kann mit dem Führungselement 24 zum Mitbewegen mit dem Führungselement 24 verbunden ein. Vorzugsweise kann das Behälterrückstauschutzelement 34 mit einem vorderen Ende des Führungselements 24, vorzugsweise gelenkig (z. B. schwenkbar um eine Hochachse), verbunden sein.

Das Behälterrückstauschutzelement 34 kann an der Längsaußenseite um eine Hochachse verschwenkbar und/oder parallel zu der Längsaußenseite verschiebbar gelagert sein. Beispielsweise kann an der Längsaußenseite eine Längsführung angeordnet sein. Die Längsführung kann sich vorzugsweise parallel zu einer Förderrichtung bzw. Längsachse des Behältermassenstromförderers 12 erstrecken. Das Behälterrückstauschutzelement 34 kann verschiebbar und verschwenkbar an der Längsführung gelagert sein, z. B. über ein Gleitstück oder Schlitten mit einem Schwenkgelenk.

Bevorzugt ist das das Behälterrückstauschutzelement 34 als ein parallel zu der Längsaußenseite verschiebbarer Schwenkarm ausgeführt.

Ähnlich wie die Verkleidung 26 für das Führungselement 24 kann das Behälterrückstauschutzelement 34 mit einer wandförmigen Verkleidung 36 zum Führen von Behältern des Behältermassenstroms B verkleidet sein (siehe rein schematisch die durchsichtig dargestellte Verkleidung 36 in Figur 2). Die Verkleidung 26 kann bspw. kraft- und/oder formschlüssig mit dem Behälterrückstauschutzelement 34 verbunden sein.

Die weitere Erfassungseinrichtung 38, 40 kann einen Behälterstau im oder stromabwärts von dem ersten Behältermassenstromauslass 14 und/oder im oder stromabwärts von dem zweiten Behältermassenstromauslass 16 erfassen.

Beispielsweise kann eine erste weitere Erfassungseinrichtung 38 einen Behälterstau im oder stromabwärts von dem ersten Behältermassenstromauslass 14 erfassen. Bevorzugt kann die erste weitere Erfassungseinrichtung 38 im oder stromabwärts von dem ersten Behältermassenstromauslass 14 angeordnet sein.

Ferner kann eine zweite weitere Erfassungseinrichtung 40 einen Behälterstau im oder stromabwärts von dem zweiten Behältermassenstromauslass 16 erfassen. Bevorzugt kann die zweite weitere Erfassungseinrichtung 40 im oder stromabwärts von dem zweiten Behältermassenstromauslass 16 angeordnet sein.

Die mindestens eine weitere Erfassungseinrichtung 38, 40 kann bspw. eine taktile Erfassungseinrichtung sein. Diese kann bspw. ein eindrückbares Führungsteil aufweisen. Das Führungsteil kann an einer Längsaußenseite des jeweiligen Behältermassenstromauslasses angeordnet sein. Das Führungsteil kann quer zu einer Förderrichtung bzw. Längsachse des Behältermassenstromförderers 12 eindrückbar sein. Ein Behälterstau kann erfasst werden, wenn das eindrückbare Führungsteil von den sich aufstauende Behältern eingedrückt wird.

Die erste Behälterbehandlungseinrichtung 42 kann stromabwärts nur vom dem ersten Behältermassenstromauslass 14 angeordnet sein. Die erste Behälterbehandlungseinrichtung 42 kann die zu dem ersten Behältermassenstromauslass 14 von der Verteileinrichtung 22 verteilten Behälter des Behältermassenstroms B empfangen.

Die zweite Behälterbehandlungseinrichtung 44 kann stromabwärts nur vom dem zweiten Behältermassenstromauslass 16 angeordnet sein. Die zweite Behälterbehandlungseinrichtung 44 kann die zu dem zweiten Behältermassenstromauslass 16 von der Verteileinrichtung 22 verteilten Behälter des Behältermassenstroms B empfangen.

Die Behälterbehandlungseinrichtungen 42, 44 können die Behälter in jeglicher denkbaren Hinsicht behandeln. Beispielsweise können die Behälterbehandlungseinrichtungen 42, 44 als Verpackungseinrichtungen zum Verpacken von Behältern ausgebildet sein.

Es ist allerdings auch möglich, dass stromabwärts von dem ersten Behältermassenstromauslass 14 ein erster Einlass einer Behälterbehandlungseinrichtung und stromabwärts von dem zweiten Behältermassenstromauslass 16 ein zweiter Einlass derselben Behälterbehandlungseinrichtung angeordnet ist. Beispielsweise kann diese Behälterbehandlungseinrichtung zum Pasteurisieren von Behältern ausgebildet sein.

Die Steuereinrichtung 46 kann in Kommunikationsverbindung mit der Erfassungseinrichtung 20, 21 dem Antrieb 28, der mindestens einen weiteren Erfassungseinrichtung 38, 40, der ersten Behälterbehandlungseinrichtung 42 und/oder der zweiten Behälterbehandlungseinrichtung 44 sein. Die Kommunikationsverbindung kann bspw. drahtlos oder drahtgebunden sein.

Beispielsweise kann die Steuereinrichtung 46 den erfassten Belegungsgrad von der Erfassungseinrichtung 20, 21 empfangen, dem Antrieb 28 Betriebsbefehle senden, den erfassten Behälterstau von der mindestens einen weiteren Erfassungseinrichtung 38, 40 empfangen und/oder den Betriebszustand von der ersten und/oder zweiten Behälterbehandlungseinrichtung 42, 44 empfangen.

Die Steuereinrichtung 46 ist dazu konfiguriert, den Antrieb 28 zum Bewegen des Führungselements 24 zu einer gewünschten Position in Abhängigkeit von dem von der Erfassungseinrichtung 20, 21 erfassten Belegungsgrad zu betreiben.

Vorzugsweise kann die Steuereinrichtung 46 den Antrieb 28 zum Bewegen des Führungselements 24 zu einer gewünschten Position zum wahlweisen gleichmäßigen oder ungleichmäßigen Aufteilen des Behältermassenstroms B zu dem ersten Behältermassenstromauslass 14 und dem zweiten Behältermassenstromauslass 16 betreiben.

Beispielsweise kann die Steuereinrichtung 46 die Verteileinrichtung 22 in einem Gleich-Betriebsmodus betreiben. In dem Gleich-Betriebsmodus kann die Steuereinrichtung 46 den Antrieb 28 in Abhängigkeit von dem erfassten Belegungsgrad zum Bewegen des Führungselements 24 zu einer gewünschten Position zum gleichmäßigen Aufteilen (50:50) des Behältermassenstroms B zu dem ersten Behältermassenstromauslass 14 und dem zweiten Behältermassenstromauslass 16 betreiben. Desto höher der erfasste Belegungsgrad ist, umso weniger kann das Führungselement 24 von dem Antrieb 28 ausgeschwenkt und/oder ausgefahren werden, um eine gleichmäßige Aufteilung zu erreichen.

Alternativ oder zusätzlich kann die Steuereinrichtung 46 die Verteileinrichtung 22 in einem Ungleich-Betriebsmodus betreiben. In dem Ungleich-Betriebsmodus kann die Steuereinrichtung 46 den Antrieb 28 in Abhängigkeit von dem erfassten Belegungsgrad zum Bewegen des Führungselements 24 zu einer gewünschten Position zum (vorgegebenen) ungleichmäßigen Aufteilen (z. B. 100:0; 90:10; 80:20; 70:30; 60:40; 40:60; 30:70; 20:80; 10:90; 0:100) des Behältermassenstroms B zu dem ersten Behältermassenstromauslass 14 und dem zweiten Behältermassenstromauslass 16 betreiben. Desto mehr Behälter des Behältermassenstroms B zu dem zweiten Behältermassenauslass 16 verteilt werden sollen, umso mehr kann das Führungselement 24 von dem Antrieb 28 ausgeschwenkt und/oder ausgefahren werden.

Alternativ oder zusätzlich kann die Steuereinrichtung 46 die Verteileinrichtung 22 in einem Stau-Betriebsmodus betreiben. Wenn bspw. von der ersten weiteren Erfassungseinrichtung 38 ein Behälterstau erfasst wird, kann die Steuereinrichtung 46 den Antrieb 28 zum Bewegen des Führungselements 24 zu einer gewünschten Position zum Verteilen des gesamten Behältermassenstroms B einzig zu dem zweiten Behältermassenstromauslass 16 betreiben, z. B. maximal ausschwenken und/oder ausfahren. Wenn andererseits bspw. von der zweiten weiteren Erfassungseinrichtung 40 ein Behälterstau erfasst wird, kann die Steuereinrichtung 46 den Antrieb 28 zum Bewegen des Führungselements 24 zu einer gewünschten Position zum Verteilen des gesamten Behältermassenstroms B einzig zu dem ersten Behältermassenstromauslass 14 betreiben z. B. maximal einschwenken und/oder einfahren.

Alternativ oder zusätzlich kann die Steuereinrichtung 46 die Verteileinrichtung 22 bspw. auch abhängig von einem (aktuellen) Betriebszustand (z. B. Leistung (= behandelte Behälter pro Zeiteinheit) oder Fehlermeldung) der ersten und/oder zweiten Behälterbehandlungseinrichtung 42, 44 betreiben. Beispielsweise kann so leistungs- oder fehlerfallabhängig die Verteilung des Behälterstroms B zu dem ersten und zweiten Behältermassenstromauslass 14, 16 vorgenommen werden.

Beispielsweise kann die Verteileinrichtung 22 von der Steuereinrichtung 46 so betrieben werden, dass ein größerer Anteil des Behältermassenstroms B zu dem ersten Behältermassenstromauslass 14 und damit zu der ersten Behälterbehandlungseinrichtung 42 verteilt wird, wenn eine aktuelle Leistung der ersten Behälterbehandlungseinrichtung 42 höher als ein vorgegebener Grenzwert ist oder höher als eine aktuelle Leistung der zweiten Behälterbehandlungseinrichtung 44 ist.

Beispielsweise kann die Verteileinrichtung 22 von der Steuereinrichtung 46 so betrieben werden, dass der gesamte Behältermassenstroms B zu dem zweiten Behältermassenstromauslass 16 und damit zu der zweiten Behälterbehandlungseinrichtung 44 verteilt wird, wenn eine Fehlfunktion der ersten Behälterbehandlungseinrichtung 42 auftritt (z. B. empfangen als ein Fehlersignal durch die Steuereinrichtung 46, z. B. gesendet als ein Fehlersignal von der ersten Behälterbehandlungseinrichtung 42).

Es ist bspw. auch möglich, dass eine weitere Verteileinrichtung auf einer der Verteileinrichtung 22 entgegengesetzten Längsseite des Behältermassenstromförderers 12 angeordnet ist (nicht in den Figuren dargestellt). Die weitere Verteileinrichtung kann wie die Verteileinrichtung 22 ausgebildet sein. Die weitere Verteileinrichtung kann bspw. spiegelbildlich zu der Verteileinrichtung 22 konfiguriert sein. Die weitere Verteileinrichtung kann der Verteileinrichtung 22 bspw. direkt gegenüberliegen oder bezüglich einer Längsachse bzw. Förderrichtung des Behältermassenstromförderers 12 versetzt zu der Verteileinrichtung 22 angeordnet sein.

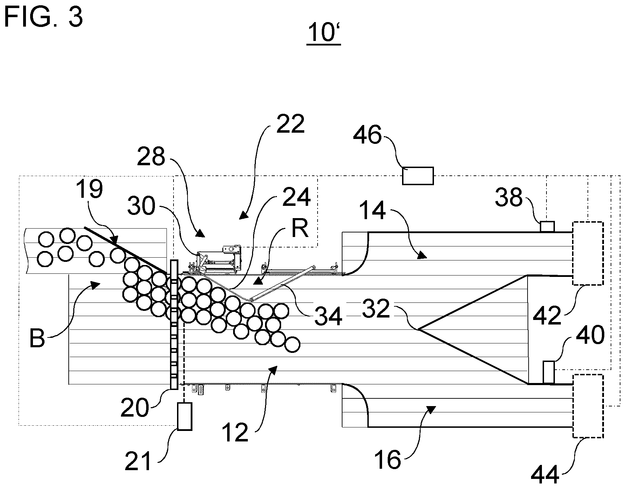

Die Figur 3 zeigt eine modifizierte Vorrichtung 10', bei der statt des Kurvenabschnitts 18 (siehe Figur 1) ein seitlicher Überschub 19 umfasst ist.

Der seitliche Überschub 19 kann bspw. ein Führungselement, wie eine Führungswand oder ein Führungsgeländer, für den Behältermassenstrom B aufweisen. Bevorzugt kann der seitliche Überschub 19 sich schräg über einen Abschnitt des Behältermassenstromförderers 12 erstrecken. Beispielsweise kann eine Längsachse des seitlichen Überschubs 19 angewinkelt zu einer Förderrichtung des Behältermassenstromförderers 12 und angewinkelt zu einer Breitenrichtung des Behältermassenstromförderers 12 sein.

Bevorzugt kann der seitliche Überschub 19 den Behältermassenstrom B von einer Längsseite des Behältermassenstromförderers 12 aus seitlich auf einen geradlinigen Abschnitt des Behältermassenstromförderers 12 schieben.

Der seitliche Überschub 19 kann eingangsseitig bezüglich der Vorrichtung 10' angeordnet sein. Der seitliche Überschub 19 kann stromaufwärts von der Verteileinrichtung 22 angeordnet sein.

Wie in Figur 3 dargestellt, kann der seitliche Überschub 19 so ausgebildet und/oder betreibbar sein, dass die Behälter des Behältermassenstroms B zum Anlegen an eine Längsseite des Behältermassenstromförderers 12 angeregt bzw. beaufschlagt werden. Beispielsweise können die Behälter des Behältermassenstroms B von dem seitlichen Überschub 19 so angeregt bzw. beaufschlagt werden, dass sie sich neben der Bewegung in der Förderrichtung des Behältermassenstromförderers 12 auch in einer Richtung quer zu der Förderrichtung bzw. Längsachse bewegen und aneinander und an den seitlichen Überschub 19 sowie der jeweiligen Längsseite des Behältermassenstromförderers 12 anlegen.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Behältermassenstromförderers, der Verteileinrichtung, der Erfassungseinrichtung und/oder der Steuereinrichtung des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Vorrichtung zum Aufteilen eines Behältermassenstroms
- 12: Behältermassenstromförderer
- 14: erster Behältermassenstromauslass
- 16: zweiter Behältermassenstromauslass
- 18: Kurvenabschnitt
- 19: seitlicher Überschub
- 20, 21: Erfassungseinrichtung
- 22: Verteileinrichtung
- 24: Führungselement
- 26: Verkleidung
- 28: Antrieb
- 30: Getriebe
- 32: Führungselement
- 34: Behälterrückstauschutzelement
- 36: Verkleidung
- 38: erste weitere Erfassungseinrichtung
- 40: zweite weitere Erfassungseinrichtung
- 42: Behälterbehandlungseinrichtung
- 44: Behälterbehandlungseinrichtung
- 46: Steuereinrichtung

- B: Behältermassenstrom
- R: (Tot-) Raum

## Patentansprüche

1. Vorrichtung (10) zum Aufteilen eines Behältermassenstroms (B) für eine Behälterbehandlungsanlage, wobei die Vorrichtung (10) aufweist:
einen Behältermassenstromförderer (12) mit einem ersten Behältermassenstromauslass (14) und einem zweiten Behältermassenstromauslass (16), der neben dem ersten Behältermassenstromauslass (14) angeordnet ist;
eine Verteileinrichtung (22) mit einem bewegbaren, vorzugsweise schwenkbaren, Führungselement (24) zum Aufteilen des Behältermassenstroms (B) zu dem ersten Behältermassenstromauslass (14) und dem zweiten Behältermassenstromauslass (16) und einem Antrieb (28), der zum Bewegen, vorzugsweise Schwenken, des bewegbaren Führungselements (24) antreibend mit dem bewegbaren Führungselement (24) verbunden ist;
eine, vorzugsweise berührungslose oder taktile, Erfassungseinrichtung (20, 21), die dazu ausgebildet ist, einen Belegungsgrad des Behältermassenstromförderers (12) stromaufwärts von der Verteileinrichtung (22) zu erfassen; und
eine Steuereinrichtung (46), die dazu konfiguriert ist, den Antrieb (28) zum Bewegen des bewegbaren Führungselements (24) zu einer gewünschten Position in Abhängigkeit von dem erfassten Belegungsgrad zu betreiben, vorzugsweise wahlweise zum gleichmäßigen oder ungleichmäßigen Aufteilen des Behältermassenstroms (B) zu dem ersten Behältermassenstromauslass (14) und dem zweiten Behältermassenstromauslass (16).

2. Vorrichtung (10) nach Anspruch 1, wobei:
der Antrieb (28) ein selbsthemmendes Getriebe (30), vorzugsweise Schneckengetriebe, aufweist.

3. Vorrichtung (10) nach Anspruch 1 und Anspruch 2, wobei:
das bewegbare Führungselement (24) an einer Längsaußenseite des Behältermassenstromförderers (12) um eine Hochachse zum Schwenken über eine Förderfläche des Behältermassenstromförderers (12) schwenkbar gelagert ist; oder
das bewegbare Führungselement (24) an einer Längsaußenseite des Behältermassenstromförderers (12) angewinkelt, vorzugsweise quer, zu einer Förderrichtung des Behältermassenstromförderers (12) zum Bewegen über eine Förderfläche des Behältermassenstromförderers (12) verschiebbar gelagert ist.

4. Vorrichtung (10) nach einem der vorherigen Ansprüche, wobei:
das bewegbare Führungselement (24) als ein Schwenkarm ausgeführt ist; und/oder
das bewegbare Führungselement (24) mit einer wandförmigen Verkleidung (26) zum Führen von Behältern verkleidet ist.

5. Vorrichtung (10) nach einem der vorherigen Ansprüche, wobei:
die Erfassungseinrichtung (20) dazu ausgebildet ist, den Belegungsgrad als Grad, zu dem der Behältermassenstromförderer (12) quer zu seiner Förderrichtung mit Behältern belegt ist, zu erfassen, vorzugsweise:
- als eine Anzahl von mit Behältern des Behältermassenstroms (B) belegten Transportbahnen oder Transportelementen des Behältermassenstromförderers (12) oder einer davon abgeleiteten Größe; und/oder
- über ein Erfassen einer von Behältern freien Transportbreite des Behältermassenstromförderers (12) oder einer davon abgeleiteten Größe; und/oder
- ausgehend von einer Längsseite des Behältermassenstromförderers (12), bevorzugt derjenigen Längsseite, an der das bewegbare Führungselement (24) angeordnet ist, oder derjenigen Längsseite, die gegenüberliegend zu dem bewegbaren Führungselement (24) angeordnet ist.

6. Vorrichtung (10) nach einem der vorherigen Ansprüche, wobei:
die Erfassungseinrichtung (20) dazu ausgebildet ist, den Belegungsgrad in einem Kurvenabschnitt (18) des Behältermassenstromförderers (12), direkt stromabwärts von einem Kurvenabschnitt (18) des Behältermassenstromförderers (12), bei einem seitlichen Überschub (19) des Behältermassenstromförderers (12) oder direkt stromabwärts von einem seitlichen Überschub (19) des Behältermassenstromförderers (12) zu erfassen, und optional
der Kurvenabschnitt (18) oder der seitliche Überschub (19) dazu ausgebildet und/oder betreibbar ist, dass die Behälter des Behältermassenstroms (B) zum Anlegen an eine Längsseite des Behältermassenstromförderers (12) angeregt werden.

7. Vorrichtung (10) nach einem der vorherigen Ansprüche, wobei:
die Erfassungseinrichtung (20) eine Sensorbrücke oder eine Sensorleiste, vorzugsweise mit mehreren voneinander beabstandeten Sensoren, aufweist, die stromaufwärts von der Verteileinrichtung (22) und oberhalb von dem Behältermassenstromförderer (12) angeordnet ist, vorzugsweise quer zu einer Förderrichtung des Behältermassenstromförderers; und/oder
die Erfassungseinrichtung (21) einen Abstandssensor aufweist, der stromaufwärts von der Verteileinrichtung (22) und seitlich neben dem Behältermassenstromförderer (12) angeordnet ist, vorzugsweise auf einer Behälterförderhöhe des Behältermassenstromförderers (12) und/oder quer zu einer Förderrichtung des Behältermassenstromförderers ausgerichtet; und/oder
die Erfassungseinrichtung (21) eine Kamera zum Erfassen des Belegungsgrads aufweist.

8. Vorrichtung (10) nach einem der vorherigen Ansprüche, wobei:
die Verteileinrichtung (22) ferner ein keilförmiges Führungselement (32) aufweist, das an einem gemeinsamen stromaufwärtsseitigen Ende des ersten Behältermassenstromauslasses (14) und des zweiten Behältermassenstromauslasses (16) zwischen dem ersten Behältermassenstromauslass (14) und dem zweiten Behältermassenstromauslass (16) angeordnet ist.

9. Vorrichtung (10) nach einem der vorherigen Ansprüche, ferner aufweisend:
mindestens eine weitere Erfassungseinrichtung (38, 40), die dazu ausgebildet ist, einen Behälterstau im oder stromabwärts von dem ersten Behältermassenstromauslass (14) und/oder im oder stromabwärts von dem zweiten Behältermassenstromauslass (16) zu erfassen,
wobei die Steuereinrichtung (46) ferner dazu konfiguriert ist, den Antrieb (28) zum Bewegen des bewegbaren Führungselements (24) zu einer gewünschten Position in Abhängigkeit von dem erfassten Behälterstau zu betreiben.

10. Vorrichtung (10) nach einem der vorherigen Ansprüche, ferner aufweisend:
eine erste Behälterbehandlungseinrichtung (42), die stromabwärts nur vom dem ersten Behältermassenstromauslass (14) angeordnet ist; und
eine zweite Behälterbehandlungseinrichtung (44), die stromabwärts nur vom dem zweiten Behältermassenstromauslass (16) angeordnet ist,
wobei die Steuereinrichtung (46) ferner dazu konfiguriert ist, den Antrieb (28) zum Bewegen des bewegbaren Führungselements (24) zu einer gewünschten Position in Abhängigkeit von einem Betriebszustand der ersten Behälterbehandlungseinrichtung (42) und/oder einem Betriebszustand der zweiten Behälterbehandlungseinrichtung (44) zu betreiben.

11. Vorrichtung (10) nach einem der vorherigen Ansprüche, wobei:
die Verteileinrichtung (22) ferner ein Behälterrückstauschutzelement (34) aufweist, das mit dem bewegbaren Führungselement (24) zum Mitbewegen mit dem bewegbaren Führungselement (24) zum Abschirmen eines Raums (R) zwischen einer Längsaußenseite des Behältermassenstromförderers (12) und einer der Längsaußenseite zugewandten Innenseite des bewegbaren Führungselements (24) verbunden ist.

12. Vorrichtung (10) nach Anspruch 11, wobei mindestens eines erfüllt ist von:
das Behälterrückstauschutzelement (34) ist mit einem vorderen Ende des bewegbaren Führungselements (24), vorzugsweise gelenkig, verbunden;
das Behälterrückstauschutzelement (34) ist an der Längsaußenseite um eine Hochachse verschwenkbar und/oder parallel zu der Längsaußenseite verschiebbar gelagert;
das Behälterrückstauschutzelement (34) ist mit einer wandförmigen Verkleidung (36) zum Führen von Behältern verkleidet; und
das Behälterrückstauschutzelement (34) ist als ein, vorzugsweise verschiebbarer, Schwenkarm ausgeführt.

13. Verfahren zum Aufteilen eines Behältermassenstroms (B), vorzugsweise mittels einer Vorrichtung (10) nach einem der vorherigen Ansprüche, wobei das Verfahren aufweist:
mittels einer, vorzugsweise berührungslosen oder taktilen, Erfassungseinrichtung (20, 21), Erfassen eines Belegungsgrads eines einen Behältermassenstrom (B) fördernden Behältermassenstromförderers (12) stromaufwärts von einer Verteileinrichtung (22); und
mittels einer Steuereinrichtung (46), Betreiben eines Antriebs (28) zum Bewegen, vorzugsweise Schwenken, eines bewegbaren, vorzugsweise schwenkbaren, Führungselements (24) der Verteileinrichtung (22) zu einer gewünschten Position in Abhängigkeit von dem erfassten Belegungsgrad zum Aufteilen des Behältermassenstroms (B) zu einem ersten Behältermassenstromauslass (14) und einem zweiten Behältermassenstromauslass (16) des Behältermassenstromförderers (12), wahlweise zum gleichmäßigen oder ungleichmäßigen Aufteilen des Behältermassenstroms (B) zu dem ersten Behältermassenstromauslass (14) und dem zweiten Behältermassenstromauslass (16).

14. Verfahren nach Anspruch 13, wobei:
das Verfahren ferner aufweist, mittels mindestens einer weiteren Erfassungseinrichtung (38, 40), Erfassen eines Behälterstaus im oder stromabwärts von dem ersten Behältermassenstromauslass (14) und/oder im oder stromabwärts von dem zweiten Behältermassenstromauslass (16), wobei das Betreiben des Antriebs (28) mittels der Steuereinrichtung (46) zum Bewegen des bewegbaren Führungselements (24) zu einer gewünschten Position ferner in Abhängigkeit von dem erfassten Behälterstau erfolgt; und/oder
wobei das Betreiben des Antriebs (28) mittels der Steuereinrichtung (46) zum Bewegen des bewegbaren Führungselements (24) zu einer gewünschten Position ferner in Abhängigkeit von einem Betriebszustand einer ersten Behälterbehandlungseinrichtung (42), die stromabwärts nur vom dem ersten Behältermassenstromauslass (14) angeordnet ist, und von einem Betriebszustand einer zweiten Behälterbehandlungseinrichtung (44), die stromabwärts nur vom dem zweiten Behältermassenstromauslass (16) angeordnet ist, erfolgt.

15. Verfahren nach Anspruch 13 oder Anspruch 14, ferner aufweisend:
mittels eines Behälterrückstauschutzelements (34) der Verteileinrichtung (22), Verhindern eines Rückstauens von Behältern in einen durch das Behälterrückstauschutzelement (34) abgeschirmten Raum (R) zwischen einer Längsaußenseite des Behältermassenstromförderers (12) und einer der Längsaußenseite zugewandten Innenseite des bewegbaren Führungselements (24), wobei sich das Behälterrückstauschutzelement (34) mit dem bewegbaren Führungselement (24) mitbewegt.
